# FASCICULE DE BREVET EUROPEEN

(11) **EP 0 748 967 B1**
(45) Date de publication et mention de la délivrance du brevet: **28.02.2001**
(21) Numéro de dépôt: 96401201.7
(22) Date de dépôt: 05.06.1996
(51) Int. Cl.: F16J 13/08

(54) **Couvercle à placer sur une porte d'un récipient à stériliser**
Deckel zum Anbringen auf einer Sterilisationsgefässtür
Cover to be attached on a closure of a sterilization vessel

(30) Priorité: 08.06.1995 FR 9506770
(43) Date de publication de la demande: 18.12.1996
(73) Titulaire: LA CALHENE, 78142 Velizy Villacoublay (FR)
(72) Inventeur: Glachet, Charles, 41100 Vendome (FR); Simon, Jean-Pierre, 41100 Vendome (FR)
(74) Mandataire: Dubois-Chabert, Guy

(56) Documents cités:
- EP-A- 0 140 612
- EP-A- 0 546 411
- DE-A- 3 819 247
- FR-A- 1 539 845
- US-A- 4 467 936

## Description

L'invention concerne un couvercle à placer sur une porte d'un récipient à stériliser.

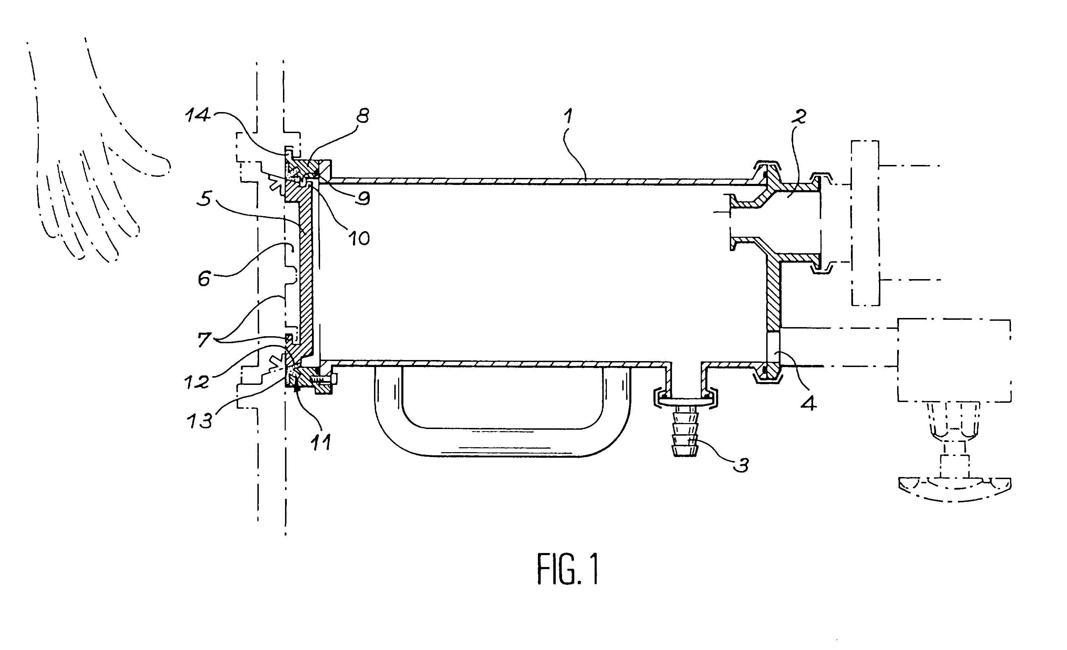

Un tel récipient est décrit à la figure 1. Sa forme est sensiblement cylindrique et son enveloppe 1 est percée de deux prises 2 et 3 pour raccorder des tuyaux d'alimentation en vapeur stérilisante et pour évacuer ces vapeurs, d'une autre prise 4 pour raccorder un appareil de mesure tel qu'un manomètre et surtout d'une porte 5 à une extrémité de l'enveloppe 1 opposée sensiblement aux prises 2, 3 et 4 et qui ferme une ouverture de l'enveloppe 1, par laquelle le récipient peut être empli ou vidé. En examinant le récipient plus attentivement, on voit que la porte 5 appartient à la famille de ce qu'on appelle les doubles portes, couramment employées pour favoriser les transferts étanches, sans communication avec l'extérieur : le récipient est approché d'une ouverture, fermée par une autre porte, d'une boîte à gant et accolé à cette ouverture par un mouvement de rotation. Les parties en contact du récipient et de la boîte sont en effet munies de moyens de verrouillage qui viennent en prise, et les portes du récipient et de la boîte sont munies de moyens semblables qui viennent simultanément en prise. Il suffit alors d'enfiler sa main dans le gant pour atteindre la porte de la boîte et la déverrouiller, en entraînant la porte du récipient jusqu'à ce que les portes soient dégagées de moyens de verrouillage qui les maintenaient respectivement sur la boîte et le récipient : les portes sont alors détachées, le récipient communique avec la boîte ; les portes sont remises par un mouvement inverse dès que le transfert des produits est achevé, puis un mouvement de déverrouillage libère les portes l'une de l'autre et le récipient de la boîte.

On reconnaît par conséquent un creux 6 sur la face extérieure de la porte 5, et des saillies planes ou oreilles externes 7 s'avançant un peu au-dessus du creux 6, à partir du bord de celui-ci et sur des portions de cercle. Des oreilles de forme analogue s'introduisent entre les oreilles 7 à l'accouplement du récipient sur la boîte à gant, puis sous elles à la rotation du récipient, et des butées (non représentées) existent pour arrêter alors la poursuite de la rotation de la porte 5 et lui permettre d'être entraînée ensuite par la porte de la boîte.

La porte 5 est montée sur une bride 8 au bout de l'enveloppe 1, et cette bride 8 est munie d'oreilles internes 9 sur sa face interne qui viennent en prise avec des oreilles internes 10 sur la face arrière ou interne de la porte 5 en venant derrière elle. De plus, la bride 8 porte un joint d'étanchéité à double effet 11 d'un genre particulier mais bien connu dans l'art et qui comprend avant tout une lèvre conique 12 pour assurer l'étanchéité entre la bride 8 et la porte 5 quand celle-ci ferme le récipient et une lèvre plane 13 affleurant à la surface avant de la bride 8 et qui garantit l'étanchéité entre la bride 8 et la paroi de la boîte à gant quand le récipient est monté sur cette boîte et que les portes sont ouvertes. Enfin, on a représenté des oreilles externes 14, situées à l'avant de la bride 8 et sur son bord extérieur pour servir de moyen de verrouillage à la boîte à gant.

Les oreilles internes 9 et 10 recouvrent assez bien la lèvre conique 12 du joint à double effet 11 et les surfaces adjacentes de la bride 8 et de la porte 5, ce qui est à l'origine de difficultés pour stériliser correctement ces parties de l'intérieur du récipient. Il n'est cependant pas envisagé de stériliser le récipient ouvert, ce qui exposerait en vérité toute sa surface interne mais imposerait de le placer dans une enceinte de stérilisateur, compliquant beaucoup le procédé.

Cette conception antérieure est décrite dans des brochures du déposant. On peut encore citer, parmi d'autres dispositifs d'étanchéité à double porte, celui de DE-A-38 19247 où une porte d'enceinte comporte un volant central pour unir une porte d'un récipient pouvant être accolé à l'enceinte soit à la porte d'enceinte, soit au récipient.

L'objet de l'invention est de concilier la facilité d'une stérilisation par les prises 2 et 3 et le souhait de procéder à une stérilisation complète de l'intérieur du récipient. Le moyen retenu pour cela est un couvercle amovible qui est placé sur la bride 8 et permet d'ouvrir légèrement la porte 5 par des moyens de préhension originaux et sûrs, sans compromettre l'étanchéité avec l'extérieur, à laquelle le couvercle devra désormais participer.

Pour résumer, l'invention est relative à un couvercle à placer sur une porte d'un récipient à stériliser, la porte étant ouverte par un mouvement rotatif de déverrouillage, couvercle caractérisé en ce qu'il comprend une partie fixe couvrant la porte, à collerette posée sur une surface circulaire du récipient entourant la porte et munie d'un joint d'étanchéité touchant la surface et de moyens de verrouillage et de serrage de la collerette contre la surface, un volant situé sous la partie fixe et muni de moyens de mise en prise avec la porte pour faire tourner la porte et l'ouvrir par translation, une tige traversant la partie fixe, unie au volant et prolongée par une poignée de manoeuvre située sur la partie fixe, des moyens d'étanchéité entre la partie fixe et soit la tige, soit le volant, et des repères d'indexage de la tige en translation et en rotation.

Des moyens particuliers peuvent être incorporés séparément ou en combinaison au couvercle pour faciliter son usage, comme on le verra à la description détaillée des figures suivantes, annexées à titre illustratif et non limitatif :
- la figure 1 (déjà décrite) représente le récipient à stériliser,

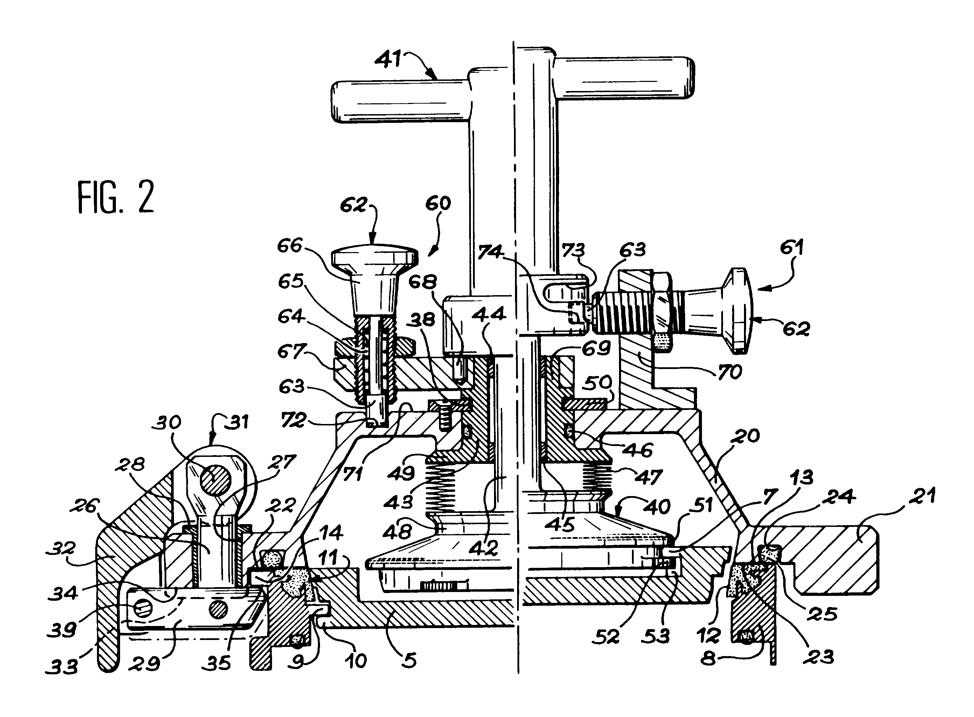

- et la figure 2 est une vue générale de l'invention.

Le couvercle conforme à l'invention comprend tout d'abord une partie fixe ou inerte, destinée à couvrir la porte 5 et son ouverture et qui se compose d'un dôme 20 et d'une collerette 21, solidaire du dôme 20 et qui s'étend sur la surface avant 22 de la bride 8 et des oreilles externes 14 et autour de cette surface.

Sa face inférieure ou arrière 23, qui touche la surface avant 22, est entaillée d'une rainure circulaire 24 dans laquelle un joint d'étanchéité 25 torique est logé. Ce joint 25 est écrasé contre la surface avant 22 et la lèvre plane 13 du joint à double effet 11 quand le couvercle est monté, ce qui interdit toute fuite vers l'extérieur entre la bride 8 et la collerette 21. Le dispositif qui garantit l'écrasement du joint 25 en même temps qu'un verrouillage de la collerette 21 sur la bride 8 comprend des axes 26 ménagés à travers des perçages 27 de la collerette 21 et libres de mouvements grâce à des coussinets 28 qui garnissent les perçages 27. L'extrémité inférieure des axes 26 porte des loquets 29, et l'extrémité supérieure porte un pivot 30 (parallèle à la collerette 21, ou encore perpendiculaire à l'axe 26) autour duquel tourne un rouleau 31 respectif, excentré et solidaire d'une poignée 32. De plus, la face inférieure de la collerette 21 est creusée de rayures rayonnantes 33 dont les surfaces de fond 34 affleurent aux surfaces inférieures 35 des oreilles externes 14, à l'opposé de la surface avant 22, et les prolongent.

Les perçages 27 débouchent dans les rainures 33, et les loquets 29 sont à la fois plus longs et plus étroits que les rainures 33 : ils s'étendent dans les rainures 33, le long d'elles et jusque sous les faces inférieures 35. Le verrouillage est établi en faisant basculer les poignées 32 pour soulever les axes 26 grâce à l'excentricité des rouleaux 31 qui roulent sur la surface supérieure de la collerette 21 ou, comme ici, sur un rebord des coussinets 28. Les loquets 29 sont pressés contre les oreilles externes 14 de la bride 8, compriment le joint torique 25 et empêchent de soulever le couvercle, et ils sont retenus dans les rainures 33. Quand les poignées 32 sont tournées dans l'autre sens, les axes 26 glissent et les loquets 29 se détachent des oreilles externes 14, ce qui permet de les dégager, avec le couvercle, en tournant celui-ci pour placer les loquets entre les oreilles externes 14. Le verrouillage peut être garanti en glissant une tige 39 dans des perçages en prolongement de chaque paire de loquet 29 et de poignée 32. On pourrait aussi dégager les loquets 29 des oreilles externes 14, après les avoir sortis des rainures 33, en tournant les poignées 32 et les axes 26.

Le dôme 20 abrite un volant 40, manipulé par une poignée 41 située hors du couvercle et reliée au volant 40 par une tige 42 qui traverse le dôme 20. Dans la réalisation représentée, on a établi une bague 43 dans l'ouverture du dôme 20, et la tige 42 est soutenue par une paire de coussinets 44 et 45 établis sur la face interne de la bague 43. L'étanchéité doit alors être rétablie par un joint torique 46 comprimé entre le dôme 20 et la bague 43, et par un soufflet 47 engagé autour de la tige 42 et qui s'étend entre les faces en regard d'un épaulement 48 du volant 40 et d'une collerette 49 de la bague 43 située sous le dôme 20. Le soufflet 47 remplace avantageusement un joint torique entre la tige 42 et la bague 43, qui serait alors situé entre des pièces mobiles et susceptible d'être endommagé ou déplacé rapidement.

La bague 43 est retenue par un collier 50 vissé au dôme 20 et formé de deux moitiés engagées dans une gorge 38 établie sur sa surface extérieure. De plus, la collerette 49 bute contre le dôme 20.

Le volant 40 est muni d'une bordure 51 susceptible d'être posée sur les oreilles externes 7 de la porte 5 et d'oreilles 52 situées à quelque distance sous la bordure 51 et susceptibles d'être glissées entre les oreilles externes 7 de la porte 5 et sous elles après un mouvement de rotation. En poursuivant ce mouvement, les oreilles 52 viennent en prise contre des butées 53 de la porte 5, qu'elles entraînent en rotation jusqu'à ce que les oreilles internes 9 et 10 se disjoignent. La porte 5 peut alors être ouverte par une traction sur la poignée 41 ; l'état correspondant a été représenté sur la moitié droite de la figure. On s'aperçoit que la lèvre conique 12 du joint à double effet 11 et les surfaces adjacentes de la bride 8 et de la porte 5 sont bien exposées aux vapeurs stérilisantes, qui passent aussi dans le dôme 20 et sont arrêtées vers l'extérieur par les joints 25 et 46 et par le soufflet 47. Un mouvement inverse de translation, enfonçant le volant 40 comme représenté sur la partie gauche de la figure, replace la porte 5 sur le joint à double effet 11 et un mouvement inverse de rotation verrouille la porte 5 sur la bride 8 puis dégage les oreilles 7 et 52, et le couvercle doit être retiré avec le volant 40 sans ouvrir la porte 5.

Les mouvements du volant 40 sont cependant faits à l'aveuglette, et on éprouve le besoin de se servir de repères d'indexage pour garantir l'exécution correcte des mouvements, aux quantités voulues. On trouve en fait deux systèmes d'indexage, en rotation 60 et en translation 61, dont chacun comprend un index 62 construit de la même manière : un doigt 63 coulisse dans une douille 64 et est repoussé par un ressort 65 vers une surface en regard entaillée. Cependant, une manette 66 est solidaire du doigt 63 pour le tirer contre l'action du ressort 65.

Les douilles 64 sont filetées, la première étant engagée dans une tablette 67 solidaire de la poignée 41 par une goupille 68 tout en étant ajustée autour d'une portion circulaire supérieure 69 de la bague 43 pour lui permettre de tourner ; et la seconde étant engagée dans une nervure 70 solidaire du dôme 20.

Le doigt 63 du système d'indexage en rotation 60 frotte contre une face de sommet 71 du dôme 20 et peut s'enfoncer dans deux trous 72 qui ont été ménagés pour marquer les courses extrêmes de rotation, et matérialiser la position correcte d'enfoncement du volant 40 (quand les oreilles 52 s'étendent entre les oreilles externes 7) et la position correspondant au verrouillage de la porte 5 sur le volant 40 et à son déverrouillage de la bride 8. Un seul de ces trous 72 est représenté. Pendant ce temps, le doigt 63 de l'autre index 62 a tourné dans une rainure 73 qui indique la bonne profondeur du volant 40 pour cette opération ; mais quand le volant 40 doit être soulevé pour ouvrir légèrement la porte 5, on fait pénétrer le doigt 63 dans un trou 74 communiquant avec la rainure 73. Le volant 40 est de nouveau enfoncé en tirant sur la manette 66 pour dégager le doigt 63 du trou 74.

## Revendications

1. Couvercle à placer sur une porte (5) d'un récipient à stériliser, la porte (5) étant ouverte par un mouvement rotatif de déverrouillage, caractérisé en ce qu'il comprend une partie fixe (20, 21) couvrant la porte (5) et ayant une collerette (21) posée sur une surface circulaire (22) du récipient entourant la porte et munie d'un joint d'étanchéité (25) touchant la surface et de moyens de verrouillage et de serrage (26 à 34, 39) de la collerette contre la surface, un volant (40) situé sous la partie fixe (20, 21) et muni de moyens (50, 52) de mise en prise avec la porte pour faire tourner la porte et l'ouvrir par translation, une tige (42) traversant la partie fixe, unie au volant et prolongée par une poignée de manoeuvre (41) située sur la partie fixe (20, 21), des moyens d'étanchéité (46, 47) entre la partie fixe et soit la tige, soit le volant, et des repères d'indexage (60, 61) de la tige en translation et en rotation.

2. Couvercle selon la revendication 1, caractérisé en ce que les moyens d'étanchéité comprennent un soufflet (47) entourant la tige et disposé entre le volant et la partie fixe.

3. Couvercle selon la revendication 2, caractérisé en ce que des coussinets (44, 45) sont disposés entre la tige et la partie fixe.

4. Couvercle selon la revendication 1, caractérisé en ce que les moyens de verrouillage et de serrage comprennent une surface de fond (34) de la collerette (21) entourant un rebord (35) du récipient opposé à la surface circulaire (22), le rebord affleurant à la surface de fond, des perçages (27) ménagés à travers la collerette (21) et débouchant à la surface de fond, des axes (26) disposés libres de mouvements dans les perçages, des loquets (29) attachés aux axes, dépassant de la surface de fond et s'étendant sur le rebord, et des dispositifs (31, 32) de traction des axes tendant à approcher les loquets (29) de la surface de fond (34).

5. Couvercle selon la revendication 4, caractérisé en ce que les dispositifs de traction consistent en des rouleaux (31) tournant de façon excentrée autour de pivots (30) des axes (26) et sur la collerette, les pivots étant parallèles à la collerette et perpendiculaires aux axes, et des poignées (32) solidaires des rouleaux.

6. Couvercle selon la revendication 4, caractérisé en ce que la surface de fond (34) est une surface de fond de rainures rayonnantes (33) plus larges que les loquets (29) et creusées dans la collerette (21).

7. Couvercle selon la revendication 1, caractérisé en ce que les repères d'indexage (60, 61) comprennent des doigts (63) poussés par des ressorts (65) contre des surfaces (71, 75) munies de creux (72, 73, 74) correspondant à des positions extrêmes souhaitées de déplacement du volant (40), et des manettes de rétraction (66) des doigts contre les ressorts.

## Claims

1. Cover to be placed on a door (5) of a receptacle to be sterilized, the door (5) being opened by a rotary unlocking movement, characterized in that it includes a fixed portion (20, 21) covering the door (5) and having a collar (21) laid on a circular surface (22) of the receptacle surrounding the door and fitted with a gasket (25) touching the surface and means (26 to 34, 39) for locking and clamping the collar against the surface, a wheel (40) situated under the fixed portion (20, 21) and fitted with means (50, 52) for engaging with the door so as to make the door rotate and open it by means of translation, a rod (42) traversing the fixed portion connected to the wheel and extended by a control handle (41) situated on the fixed portion (20, 21), imperviousness means (46, 47) between the fixed portion and either the rod or the wheel, and marks (60, 61) for indexing the rod on translation and on rotation.

2. Cover according to claim 1, characterized in that the imperviousness means include bellows (47) surrounding the rod and disposed between the wheel and the fixed portion.

3. Cover according to claim 2, characterized in that linings (44, 45) are disposed between the rod and the fixed portion.

4. Cover according to claim 1, characterized in that the locking and tightening means include a bottom surface (34) of the collar (21) surrounding an edge (35) of the receptacle opposite the circular surface (22), the edge being flush with the bottom surface, perforations (27) provided through the collar (21) and opening on the bottom surface, spindles (26) disposed so as to move freely in the perforations, latches (29) attached to the spindles extending beyond the bottom surface and onto the edge, and traction devices (31, 32) of the spindles tending to come near the latches (29) of the bottom surface (34).

5. Cover according to claim 4, characterized in that the traction devices consist of rollers (31) rotating to move out of centre around pivots (30) of the spindles (26) and onto the collar, the pivots being parallel to the collar and perpendicular to the spindles, and handles (32) integral with the rollers.

6. Cover according to claim 4, characterized in that the bottom surface (34) is a bottom surface with radiating grooves (33) wider than the latches (29) and recessed in the small collar (21).

7. Cover according to claim 1, characterized in that the indexing marks (60, 61) include fingers (63) propelled by springs (65) against surfaces (71, 75) fitted with recesses (72, 73, 74) corresponding to the desired extreme positions for movement of the wheel (40), and control levers (66) for retracting the fingers against the springs.

## Patentansprüche

1. Deckel zum Anbringen auf einer Tür (5) eines Sterilisationsgefäßes, wobei die Tür (5) durch eine Entriegelungs-Drehbewegung geöffnet wird,
**dadurch gekennzeichnet,**
dass er gebildet wird durch einen festen Teil (20, 21), der die Tür (5) überdeckt und einen Kragen bzw. Bund (21) hat, der auf einer kreisförmigen Fläche (22) des Gefäßes sitzt, die die Tür umgibt und mit einer Dichtung (25) ausgestattet ist, die diese Fläche berührt, sowie durch Verriegelungs- und Spanneinrichtungen (26 bis 34, 39) des Bunds auf der Fläche, ein Rad (40), unter dem festen Teil (20, 21) und ausgestattet mit Einrichtungen (50, 52) zum Eingreifen in die Tür, um die Tür zu drehen und durch Translation zu öffnen, eine den festen Teil durchquerende Stange (42), mit dem Rad verbunden und durch einen Betätigungsgriff (41) verlängert, der sich über dem festen Teil (20, 21) befindet, Abdichtungseinrichtungen (46, 47) zwischen dem festen Teil und der Stange beziehungsweise dem Rad, und Bezugseinrichtungen (60, 61) zur Translations- und Rotationsindexierung der Stange.

2. Deckel nach Anspruch 1, dadurch gekennzeichnet, dass die Abdichtungseinrichtungen einen Faltenbalg (47) umfassen, der die Stange umgibt und zwischen dem Rad und dem festen Teil angeordnet ist.

3. Deckel nach Anspruch 2, dadurch gekennzeichnet, dass Lagerbuchsen (44, 45) zwischen der Stange und dem festen Teil angeordnet sind.

4. Deckel nach Anspruch 1, dadurch gekennzeichnet, dass die Verriegelungs- und Spanneinrichtungen eine untere Fläche (34) des Bunds (21) umfassen, die einen der kreisförmigen Fläche (22) entgegengesetzten Rand (35) des Gefäßes umgibt, wobei dieser Rand auf gleicher Höhe mit der unteren Fläche ist, sowie den Bund (21) durchquerende und an der unteren Fläche austretende Bohrungen (27), in den Bohrungen frei bewegliche Achsen (26), an den Achsen befestigte, über die untere Fläche bis unter den Rand hinausragende Klinken (29) und Zugeinrichtungen (31, 32) der Achsen umfassend, die bestrebt sind, die Klinken (29) der unteren Fläche (34) anzunähern.

5. Deckel nach Anspruch 4, dadurch gekennzeichnet, dass die Zugeinrichtungen Zylinder (31), die sich exzentrisch um Zapfen (30) der Achsen (26) herum und auf dem Bund drehen, wobei die Zapfen parallel zu dem Bund und senkrecht zu den Achsen sind, und Griffe (32) umfassen, die mit den Zylindern aus einem Stück sind.

6. Deckel nach Anspruch 4, dadurch gekennzeichnet, dass die untere Fläche (34) eine untere Fläche mit strahlenförmigen Rillen bzw. Nuten (33) ist, breiter als die Klinken (29) und in den Bund (21) eingearbeitet.

7. Deckel nach Anspruch 1, dadurch gekennzeichnet, dass die Indexierungs-Bezugseinrichtungen (60, 61) gebildet werden durch Finger (63), die durch Federn (65) gegen Flächen (71 ,75) gepresst werden, welche Vertiefungen (72, 73, 74) aufweisen, die den erwünschten extremen Stellungen der Bewegung des Rads (40) entsprechen, und durch Griffe (66) zum Zurückziehen der Finger gegen die Federn.
